(19) Europäisches Patentamt / European Patent Office / Office européen des brevets

(11) **EP 4 393 652 B1**

(12) **EUROPEAN PATENT SPECIFICATION**

(45) Date of publication and mention of the grant of the patent:
**21.01.2026 Bulletin 2026/04**

(21) Application number: **22918246.4**

(22) Date of filing: **14.10.2022**

(51) International Patent Classification (IPC):
**B25J 9/00** *(2006.01)* **B25J 9/08** *(2006.01)*
**B25J 11/00** *(2006.01)* **B25J 19/00** *(2006.01)*
**B25J 17/00** *(2006.01)* **B62D 57/032** *(2006.01)*
**B62D 57/028** *(2006.01)*

(52) Cooperative Patent Classification (CPC):
**B25J 17/00; B25J 19/0016; B62D 57/028; B62D 57/032**

(86) International application number:
**PCT/CN2022/125435**

(87) International publication number:
**WO 2023/130793 (13.07.2023 Gazette 2023/28)**

(54) **WAIST STRUCTURE OF ROBOT AND ROBOT**

TAILLENSTRUKTUR EINES ROBOTERS UND ROBOTER

STRUCTURE DE TAILLE DE ROBOT ET ROBOT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.01.2022 CN 202210003032**

(43) Date of publication of application:
**03.07.2024 Bulletin 2024/27**

(73) Proprietor: **Tencent Technology (Shenzhen) Company Limited**
**Shenzhen, Guangdong, 518057 (CN)**

(72) Inventors:
• **ZHANG, Dongsheng**
**Shenzhen, Guangdong 518057 (CN)**
• **LIU, Fusheng**
**Shenzhen, Guangdong 518057 (CN)**
• **XU, Qiwei**
**Shenzhen, Guangdong 518057 (CN)**

(74) Representative: **Novagraaf International SA**
**Chemin de l'Echo 3**
**1213 Onex, Geneva (CH)**

(56) References cited:
WO-A1-2020/245038    CN-A- 101 850 554
CN-A- 103 192 377    CN-A- 104 985 585
CN-A- 106 737 593    CN-A- 107 243 921
CN-A- 109 893 398    CN-A- 111 059 431
CN-B- 103 192 377    US-A1- 2015 020 620
US-A1- 2021 387 346

**Description**

FIELD OF THE TECHNOLOGY

The present disclosure relates to the technical field of robots, specifically to a waist structure of a robot, and a robot.

BACKGROUND OF THE DISCLOSURE

Some bio-robots can simulate actions and postures of human or animals. The waist of a bio-robot serves as an important connecting structure, which plays a role of supporting the body and upper limbs, enlarging an operating space, and making the entire robot more flexible in motion. To achieve agile operations of the upper part of the body, the waist needs to have a sufficient degree of freedom and high load-bearing capacity, as well as to be able to quickly perform actions such as bending down, bending backward, and side swaying.

The waist of the bio-robot is mostly achieved in a series configuration. Generally, a motor and a reducer need to be integrated into a complete set of module to form an actuator. The module is relatively heavy, usually has poor load-bearing capacity and transmission accuracy, and has a limited range of motion. Therefore, how to design a waist structure reasonably is crucial for system construction of a bio-robot.

CN104985585A discloses a bionic waist mechanism of a humanoid robot. The bionic waist mechanism comprises a linear driving input module, a pitching deflection output module and a supporting connection structure. The linear driving input module comprises two linear telescoping driving devices which are parallel to each other and independently carry out the driving process and form a parallel differential mechanism. The linear telescoping driving devices are inclined relative to the vertical axis of the axis of the humanoid robot and are symmetrically distributed in space, a spatial triangular structure is formed, and the stability, the rigidity and the bearing capacity of the whole bionic waist mechanism can be improved.

CN103192377B discloses a free motion device which comprises a base, at least one driving motor and at least one driving rod, wherein a turning joint is arranged on the base, and a motion platform is supported through the turning joint. A swing arm is arranged on the output end of the driving motor, and driven to rotate during the rotation of the driving motor, and one of the connecting rods is movably connected at the tail end of the swing arm. The other end of the connecting rod is movably connected to the other side of the motion platform and the motion platform is driven by the swing arm to move around the turning joint.

WO2020/245038 A1 discloses a load compensation device comprising an assisted joint configured to be constrained to a support structure, a main rod comprising a proximal end connected to the assisted joint, and further comprising a distal end configured to be stressed by an applied load, an auxiliary rod comprising a first end and a second end and an elastic element configured to provide an elastic force which acts between the second end of the auxiliary rod and the distal end of the main rod.

SUMMARY

The invention is set out in the appended claims.

BRIEF DESCRIPTION OF THE DRAWINGS

In order to illustrate the technical solutions in the embodiments of the present disclosure more clearly, the following briefly introduces the accompanying drawings required in the description of the embodiments. Obviously, the accompanying drawings described below are only some embodiments of the present disclosure. Those of ordinary skill in the art can also obtain other drawings according to the drawings without any creative work.

 FIG. 1 is an axis view of a waist structure according to an embodiment of the present disclosure.
 FIG. 2 is a schematic structural diagram of a robot according to an embodiment of the present disclosure.
 FIG. 3 is a schematic structural diagram of a waist structure according to an embodiment of the present disclosure.
 FIG. 4 is a sectional view of a waist structure according to an embodiment of the present disclosure.
 FIG. 5 is another axis view of a waist structure according to an embodiment of the present disclosure.
 FIG. 6 is a front view of a drive assembly according to an embodiment of the present disclosure.
 FIG. 7 is an exploded diagram of a waist structure according to an embodiment of the present disclosure.
 FIG. 8 is still another axis view of a waist structure according to an embodiment of the present disclosure.
 FIG. 9 is a schematic diagram of an action principle of gravity compensation of a waist structure according to an embodiment of the present disclosure.
 FIG. 10 is another schematic diagram of an action principle of gravity compensation of a waist structure according to an embodiment of the present disclosure.

DESCRIPTION OF EMBODIMENTS

The technical schemes in all embodiments of the present disclosure will be clearly and completely described below with reference to the drawings in the embodiments of the present disclosure, and it is obvious that the described embodiments are only a part of the embodiments of the present disclosure, but not all of them. All other embodiments obtained by a person skilled in the art based on the embodiments of the present disclosure without creative efforts shall fall within the protection scope of the present disclosure as defined by the features of the appended claims.

In the description of the present disclosure, it should be understood that orientation or position relationships indicated by the terms such as "center", "longitudinal", "transverse", "length", "width", "thickness", "on", "under", "front", "rear", "left", "right", "vertical", "horizontal", "top", "bottom", "inside", "outside", "clockwise", "anticlockwise", and the like are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure. In addition, the terms "first" and "second" are only for the purpose of description, and may not be understood as indicating or implying the relative importance or implicitly indicating the number of technical features indicated. Thus, features defined by "first" and "second" may expressly or implicitly include one or more of that feature. In the description of the present invention, "plurality" means two or more, unless otherwise expressly and specifically defined.

In the description of the present disclosure, it should be noted that unless otherwise explicitly specified or defined, the terms such as "mount", "connect", and "couple" should be understood in a broad sense. For example, the connection may be a fixed connection, a detachable connection, an integral connection, a mechanical connection, an electrical connection, or mutual communication. Or, the connection may be a direct connection, an indirect connection through an intermediate medium, internal communication between two components, or an interaction relationship between two components. A person of ordinary skill in the art may understand the specific meanings of the foregoing terms in the present disclosure according to specific situations.

In the present disclosure, unless otherwise explicitly stipulated and restricted, that a first feature is "on" or "below" a second feature may include that the first and second features are in direct contact, or may include that the first and second features are not in direct contact but in contact by using other features therebetween. In addition, that the first feature is "on", "above", or "over" the second feature includes that the first feature is right above and on the inclined top of the second feature or merely indicates that a level of the first feature is higher than that of the second feature. That the first feature is "below", "under", or "beneath" the second feature includes that the first feature is right below and at the inclined bottom of the second feature or merely indicates that a level of the first feature is lower than that of the second feature.

In all embodiments of the present disclosure including the embodiments of both the claims and the specification (hereinafter referred to as "all embodiments of the present disclosure"). Many different implementations or examples are provided in the following disclosure to implement different structures of the present disclosure. To simplify the disclosure of the present disclosure, components and settings in particular examples are described below. Of course, they are merely examples and are not intended to limit the present disclosure. In addition, in the present disclosure, reference numerals and/or reference letters may be repeated in different examples. The repetition is for the purposes of simplification and clearness, and is not intended to indicate relationships between the various implementations and/or settings discussed herein.

All the embodiments of the present disclosure can be applied to various application scenarios such as artificial intelligence, a robot technology, mechanical and electrical integration, and the like.

First, some nouns or terms appearing in a process of describing the embodiments of the present disclosure are suitable for the following explanations:

Artificial Intelligence (AI) involves a theory, a method, a technology, and an application system that use a digital computer or a machine controlled by the digital computer to simulate, extend, and expand human intelligence, sense an environment, obtain knowledge, and use the knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

A robot can be a machine that can perform tasks such as work or movement through programming and automatic control. Robots have basic features such as perception, decision-making, and execution, which can assist or even replace human in completing dangerous, burdensome, and complex work, to improve the working efficiency and quality, serve human life, and expand or extend the range of human activities and abilities.

The mechanical and electrical integration technology is a comprehensive high-tech that combines a microelectronic technology, a computer technology, an information technology, and a mechanical technology. It is an organic combination of the mechanical technology and the microelectronic technology.

A degree of freedom refers to the number of independent motion parameters that needs to be given for determining a motion of a mechanism according to a mechanical principle. In a definition of a degree of freedom, uniqueness, necessity, and independence are three key words. Unique determination means that after these variables are given, the robot has a unique configuration. Necessity is a minimal concept, which means a minimum number of variables that can determine a status of the robot. Independence means that these variables can change independently.

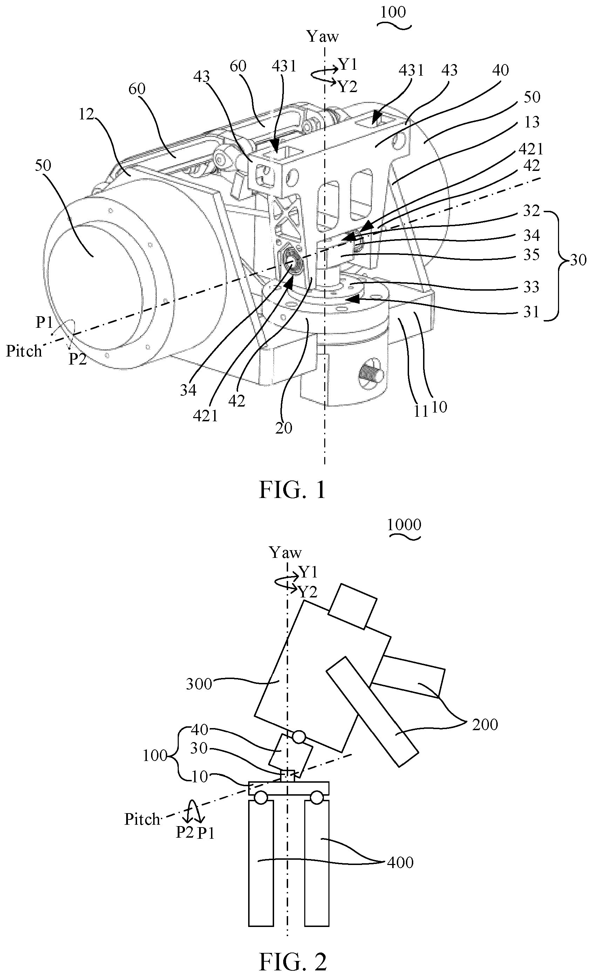

Specifically, referring to FIG. 1 to FIG. 10, the embodiments of the present disclosure provide a waist structure 100 of a robot 1000. The waist structure 100 includes a fixed platform 10, a load-carrying bearing 20, a connector 30, a movable platform 40, two or more motors 50, and two drive assemblies 60. The load-carrying bearing 20 can be arranged on the fixed platform 10. The connector 30 includes a first end 31 and a second end 32 facing away from each other. The first end 31 can be provided with a yaw shaft 33. The yaw shaft 33 can be connected to an inner ring 21 of the load-carrying bearing 20. The second end 32 can be provided with a pitch shaft 34. The movable platform 40 and the pitch shaft 34 can be rotatably connected. The two or more motors 50 are arranged on the fixed platform 10. Each drive assembly 60 corresponds to one motor 50, and the drive assemblies 60 are connected to the movable platform 40 and the corresponding motors 50. The two or more motors 50 can actuate the drive assemblies 60 to drive the movable platform 40 to rotate relative to the connector 30 in an axial direction of the pitch shaft 34, and can actuate the corresponding drive assemblies 60 to drive the movable platform 40 and the connector 30 to rotate relative to the fixed platform 10 in an axial direction of the yaw shaft 33.

The "fixed platform 10" and the "movable platform 40" can be meant to indicate that the two platforms can move relatively, rather than limiting that the fixed platform 10 needs to be in a stationary state and that the movable platform 40 needs to be in a moving state. Therefore, the fixed platform 10 and the movable platform 40 here may be referred to as a "first platform" and a "second platform", respectively.

Referring to FIG. 1, in an inertial coordinate system (inertial system) corresponding to the waist structure 100, the movable platform 40 rotates relative to the connector 30 in the axial direction of the pitch shaft 34. Equivalently, the movable platform 40 rotates relative to the fixed platform 10 in a pitch angle direction (P1/P2 direction) of a posture angle. The movable platform 40 rotates relative to the fixed platform 10 in the axial direction of the yaw shaft 33. Equivalently, the movable platform 40 rotates relative to the fixed platform 10 in a yaw angle direction (Y1/Y2 direction) of the posture angle. In this way, the waist structure 100 has two degrees of freedom, and can achieve large-range and high-dexterity motions in the pitch angle (P1/P2) direction and the yaw angle (Y1/Y2) direction.

Referring to FIG. 2, FIG. 2 is a humanoid robot 1000 using a waist structure 100. The humanoid robot 1000 includes an upper limb structure 200, a body structure 300, a waist structure 100, and a lower limb structure 400. A fixed platform 10 of the waist structure 100 is connected to the lower limb structure 400, and a movable platform 40 can be connected to the body structure 300. The waist structure 100 can connect the body structure 300 with the lower limb structure 400. When the movable platform 40 rotates relative to a connector 30 in an axial direction of a pitch shaft 34, the movable platform 40 rotates relative to the fixed platform 10 in a pitch direction (P1/P2 direction), so that the movable platform 40 can drive the body structure 300 to perform actions of "bending down", "bending backward", and the like relative to the lower limb structure 400. When the movable platform 40 and the connector 30 rotate relative to the fixed platform 10 in an axial direction of a yaw shaft 33, the movable platform 40 rotates relative to the fixed platform 10 in a yaw direction (Y1/Y2 direction), so that the movable platform 40 can drive the body structure 300 to perform actions of "twisting the waist", "side swaying", and the like relative to the lower limb structure 400. In this way, the waist structure 100 can achieve that the body structure 300 of the humanoid robot has two degrees of freedom in motion relative to the lower limb structure 400, and meet a demand of the humanoid robot 1000 for large-range and high-dexterity motions, so that the humanoid robot 1000 can make more postures.

The waist structure 100 of this embodiment of the present disclosure is not limited to being applied to the humanoid robot 1000. Some bio-robots, for example, a quadruped robot, a hexapod robot, an eight-legged robot, and a snake-type robot, which have the body structure 300 and the lower limb structure 400 can also use the waist structure 100, so that the body structure 300 has two degrees of freedom in motion relative to the lower limb structure 400, to improve the motion range and motion dexterity of the bio-robot 1000.

Referring to FIG. 1, two or more motors 50 serving as power output apparatuses can be arranged in the waist structure 100, and each motor 50 corresponds to one drive assembly 60. The drive assemblies 60 transmit power output by the motors 50 to the movable platform 40, to drive the movable platform 40 to rotate relative to the fixed platform 10. Each motor 50 independently actuates the corresponding drive assembly 60 to move, that is, motions of the two drive assemblies 60 of the waist structure 100 can be independent of each other. The drive assemblies 60 can be connected to the movable platform 40 and the motors 50 arranged in the fixed platform 10. Equivalently, the drive assemblies 60 can be connected to the movable platform 40 and the fixed platform 10. In this way, the fixed platform 10 and the movable platform 40 of the waist structure 100 can be connected through the two drive assemblies 60 that move independently. Furthermore, the waist structure 100 has two degrees of freedom, so that the waist structure 100 is in a parallel form. Compared with a serial form, in the parallel waist structure 100 of this embodiment of the present disclosure, the motor 50 has a relatively small rotational inertia and high rotation accuracy, so that a requirement for a torque of the motor 50 is relatively low. It is not necessary to arrange a reducer to ensure the drive accuracy, so that the number of essential parts of the waist structure 100 can be reduced, the waist structure 100 is more compact, and the weight of the waist structure 100 is reduced. Furthermore, the rigidity of the parallel form can be greater than that of the serial form, so that the waist structure 100 has relatively high carrying capacity.

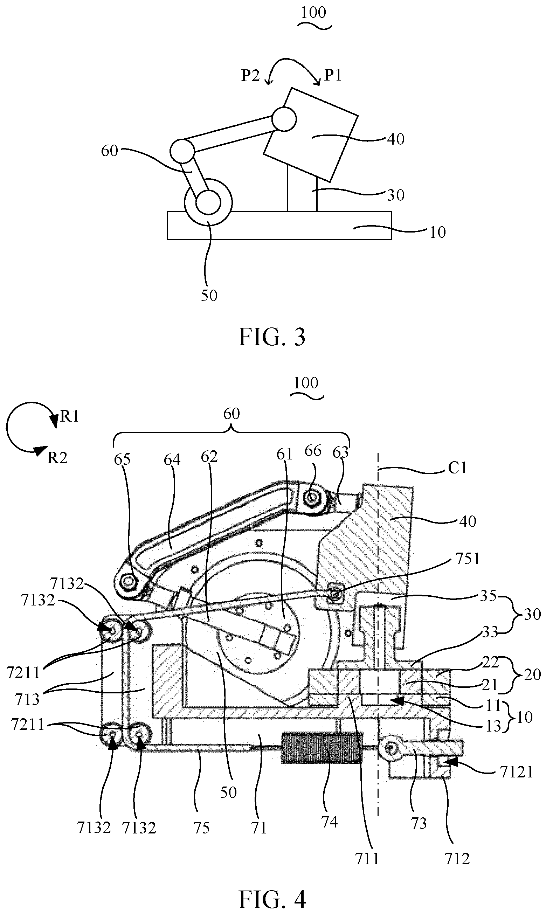

In all embodiments of the present disclosure, referring to FIG. 3, FIG. 3 is a simplified schematic diagram of the fixed platform 10, the movable platform 40, the connector 30, the motors 50, and the drive assemblies 60 of the waist structure 100. In the perspective of FIG. 3, the motors 50 can rotate clockwise, to actuate the drive assemblies 60 to drive the movable platform 40 to rotate relative to the fixed platform 10 clockwise (in the P1 direction), performing an action of "bending down". Similarly, the motors 50 can rotate anticlockwise (in the P2 direction), to actuate the drive assemblies 60 to drive the movable platform 40 to rotate relative to the fixed platform 10 anticlockwise, performing an action of "bending backward".

In all embodiments of the present disclosure, with reference to FIG. 1, a rotation direction of a revolute pair formed by the drive assemblies 60 and the corresponding motors 50 can be in the pitch angle (P1/P2) direction, so that the rotation, in the pitch angle direction, of the movable platform 40 driven by the drive assemblies 60 has a relatively large rotation range, which can achieve that the movable platform 40 rotates relative to the fixed platform 10 in a large angle in the pitch angle (P1/P2) direction, that is, the movable platform 40 can perform large-angle actions of "bending down" and "bending backward".

In all embodiments of the present disclosure, referring to FIG. 1 and FIG. 3, in the waist structure 100 provided in this embodiment of the present disclosure, the drive assemblies 60 can be connected to the corresponding motors 50 in a manner of the revolute pair, and the drive assemblies 60 can be connected to the movable platform at a position in front of or behind the movable platform. In this way, the drive assemblies do not need to be arranged between the movable platform 40 and the fixed platform 10, so that the movable platform 40 and the fixed platform 10 can be arranged more compactly, which is conductive to achieving a small-sized design of the waist structure 100.

In summary, in the waist structure 100 of this embodiment of the present disclosure, the motors 50 can actuate the drive assemblies 60 to do a circumferential motion, to drive the movable platform 40 to do a large-range and high-dexterity motion relative to the fixed platform 10 in the pitch angle (P1/P2) direction and the yaw angle (Y1/Y2) direction, so that the waist structure 100 can be constituted into the parallel form, has the two degrees of freedom, and has the advantages of high carrying capacity, high dynamic response capacity, high motion accuracy, large motion range, compact structure, and the like.

The following describes the waist structure 100 according to the embodiments of the present disclosure with reference to the accompanying drawings.

Referring to FIG. 1 and FIG. 4, the load-carrying bearing 20 can be arranged on the fixed platform 10. Specifically, an outer ring 22 of the load-carrying bearing 20 can be connected to the fixed platform 10, and the inner ring 21 of the load-carrying bearing 20 can rotate relative to the outer ring 22, that is, can rotate relative to the fixed platform 10. The yaw shaft 33 of the first end 31 of the connector 30 can be connected to the inner ring 21 of the load-carrying bearing 20. The pitch shaft 34 of the second end 32 of the connector 30 can be rotatably connected to the movable platform 40, to connect the movable platform 40 to the fixed platform 10. When the movable platform 40 is actuated to rotate in the yaw angle (Y1/Y2) direction, the connector 30 and the inner ring 21 of the load-carrying bearing 20 rotate in the yaw angle (Y1/Y2) direction together, that is, the movable platform 40, the connector 30, and the inner ring 21 of the load-carrying bearing 20 rotate relative to the fixed platform 10 in the axial direction of the yaw shaft. When the movable platform 40 is actuated to rotate in the pitch angle (P1/P2) direction, the movable platform 40 rotates relative to the connector 30 in the axial direction of the pitch shaft 34, to achieve that the movable platform 40 rotates relative to the connector 30 in the axial direction of the pitch shaft 34.

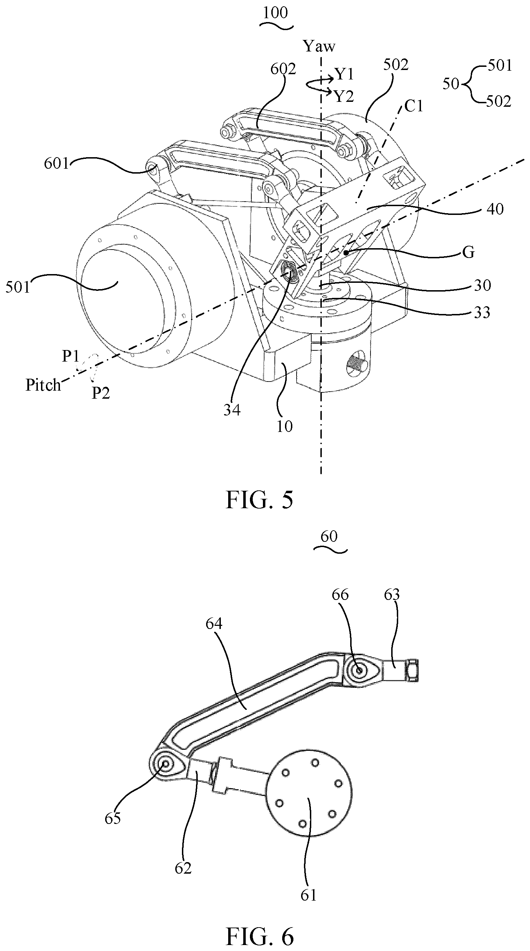

In all embodiments of the present disclosure, with reference to FIG. 5, the two or more motors 50 respectively independently actuate the corresponding drive assemblies 60 to move. When the two or more motors 50 synchronously rotate in the same direction, the two or more motors 50 can actuate the corresponding drive assemblies 60 to drive the movable platform 40 to rotate relative to the connector 30 in the axial direction of the pitch shaft 34. When rotation directions of the two or more motors 50 are different, the two or more motors 50 can actuate the corresponding drive assemblies 60 to drive the movable platform 40 and the connector 30 to rotate relative to the fixed platform 10 in the axial direction of the yaw shaft 33.

For example, referring to FIG. 4 and FIG. 5, taking two motors as an example, it is assumed that the two motors 50 are separately a motor 501 and a motor 502, and that the two drive assemblies 60 are separately a drive assembly 601 and a drive assembly 602. It is assumed that a clockwise direction R1 shown in FIG. 5 is a forward rotation direction of the motor 501 and the motor 502, and an anticlockwise direction R2 is a backward rotation direction of the motor 501 and the motor 502.

In all embodiments of the present disclosure, referring to FIG. 4 and FIG. 5, positions of the two drive assemblies 60 connected to the movable platform 40 are located above a center-of-gravity position G of the movable platform 40. Referring to FIG. 6, when the motor 501 and the motor 502 synchronously rotate at the same speed in the forward direction, the drive assembly 601 and the drive assembly 602 synchronously push the movable platform 40 to rotate in the pitch angle (P1/P2) P1 direction to perform an action of "bending down". Referring to FIG. 5, when the motor 501 and the motor 502 synchronously rotate at the same speed in the backward direction, the drive assembly 601 and the drive assembly 602 synchronously pull the movable platform 40 to rotate in the pitch angle (P1/P2) P2 direction to perform an action of "bending backward". Referring to FIG. 6, when speeds of the motor 501 and the motor 502 are the same, that the motor 501 rotates in the forward direction, and that the motor 502 rotates in the backward direction, the drive assembly 601 pushes the movable platform 40, and the drive assembly 602 pulls the movable platform 40, so that the movable platform 40 rotates in the yaw angle (Y1/Y2) Y1 direction. When speeds of the motor 501 and the motor 502 are the same, that the motor 501 rotates in the backward direction, and that the motor 502 rotates in the forward direction, the drive assembly 601 pulls the movable platform 40, and the drive assembly 602 pushes the movable platform 40, so that the movable platform 40 rotates in the yaw angle (Y1/Y2) Y2 direction.

In all embodiments of the present disclosure, referring to FIG. 4 and FIG. 5, when rotation directions of the two motors 50 are different and speeds of the two motors 50 are different, the two motors 50 can actuate the corresponding drive assemblies 60 to drive the movable platform 40 to rotate relative to the connector 30 in the axial direction of the pitch shaft 34, and the two motors 50 can actuate the corresponding drive assemblies 60 to drive the movable platform 40 and the connector 30 to rotate relative to the fixed platform 10 in the axial direction of the yaw shaft 33. Positions of the two drive assemblies 60 connected to the movable platform 40 can be respectively located on left and right sides of a center axis C1 of the movable platform 40. When speeds of the motor 501 and the motor 502 are different, the drive assembly 601 and the drive assembly 602 can drive the movable platform 40 to rotate in the pitch angle (P1/P2) direction and the yaw angle (Y1/Y2) direction. For example, referring to FIG. 5, when the motor 501 rotates in the forward direction and that the motor 502 does not rotate, the drive assembly 601 can push the movable platform 40 to rotate in the pitch angle (P1/P2) P1 direction. In addition, since only the drive assembly 601 pushes the movable platform 40, the left side of the center axis of the movable platform 40 can be stressed, which can drive the movable platform 40 to rotate in the yaw angle (Y1/Y2) Y1 direction.

In all embodiments of the present disclosure, referring to FIG. 4 and FIG. 5, when rotation directions of the two motors 50 are different and speeds of the two motors 50 are different, the two motors 50 can actuate the corresponding drive assemblies 60 to drive the movable platform 40 to rotate relative to the connector 30 in the axial direction of the pitch shaft 34, and the two motors 50 can actuate the corresponding drive assemblies 60 to drive the movable platform 40 and the connector 30 to rotate relative to the fixed platform 10 in the axial direction of the yaw shaft 33. For example, when rotation directions of motor 501 and the motor 502 are the same and that speeds of the motor 501 and the motor 502 are different, the motor 501 and the motor 502 can separately actuate the drive assembly 601 and the drive assembly 602 to supply different power to the left and right sides of the center axis of the of the movable platform 40, so that the movable platform 40 rotates in the yaw angle (Y1/Y2) direction while rotating in the pitch angle (P1/P2) direction.

Referring to FIG. 4 and FIG. 5, when rotation directions of the motor 501 and the motor 502 are different, if speeds of the motor 501 and the motor 502 are the same, a push force and a pull force which are supplied by the drive assembly 601 and the drive assembly 602 to the left and right sides of the center axis of the movable platform 40 can be in a balance, so that the movable platform 40 rotates in the yaw angle (Y1/Y2) direction.

In all embodiments of the present disclosure, referring to FIG. 4 and FIG. 5, when rotation directions of the two motors 50 are different and speeds of the two motors 50 are different, the two motors 50 can actuate the corresponding drive assemblies 60 to drive the movable platform 40 to rotate relative to the connector 30 in the axial direction of the pitch shaft 34, and the two motors 50 can actuate the corresponding drive assemblies 60 to drive the movable platform 40 and the connector 30 to rotate relative to the fixed platform 10 in the axial direction of the yaw shaft 33. For example, when rotation directions of motor 501 and the motor 502 are different and that speeds of the motor 501 and the motor 502 are also different, a push force and a pull force which are supplied by the drive assembly 601 and the drive assembly 602 to the left and right sides of the center axis of the movable platform 40 can be not in a balance, so that the movable platform 40 rotates in the pitch angle (P1/P2) direction while rotating in the yaw angle (Y1/Y2) direction.

In this way, the rotations of the movable platform 40 relative to the fixed platform 10 in the two degrees of freedom, namely, the pitch angle (P1/P2) and the yaw angle (Y1/Y2), can be accurately controlled by controlling the rotation directions and speeds of the motor 501 and the motor 502, so that the waist structure 100 can change various actions.

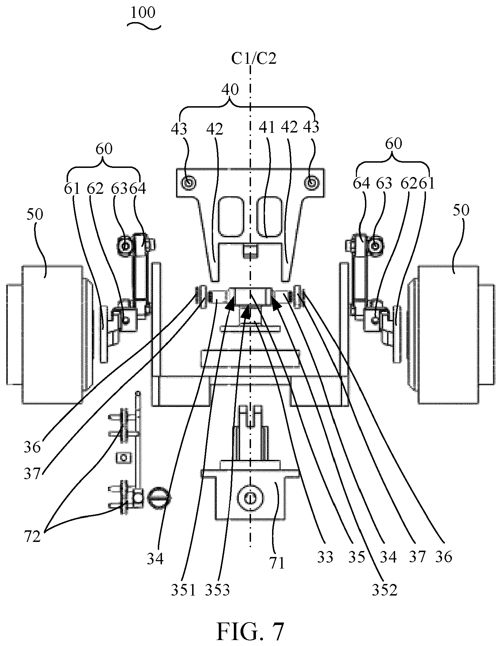

In all embodiments of the present disclosure, referring to FIG. 6 and FIG. 7, each drive assembly 60 includes: a moving part 61, a first connecting rod 62, a second connecting rod 63, and a third connecting rod 64. With reference to FIG. 1 and FIG. 4, the motors 50 can be connected to the moving parts 61, and can actuate the moving parts 61 to rotate circumferentially. Specifically, output shafts (not shown) of the motors 50 can be fixedly connected to the moving parts 61, to drive the moving parts 61 to rotate when the output shafts of the motors rotate. The first connecting rods 62 can be connected to the moving parts 61. The second connecting rods 63 can be connected to the movable platform 40. The third connecting rods 64 can be connected and arranged between the first connecting rod 62 and the second connecting rod 63, and can be connected to the first connecting rod 62 and the second connecting rod 63. Referring to FIG. 6, in this way, the drive assembly 60 can change a direction of an actuating force supplied by the motor 50, and provide a push force or a pull force to the movable platform 40 in an axial direction of a roll shaft, so that the gravity of the movable platform 40 and the weight of a load on the movable platform 40 which need to be borne are small; and a relatively good dynamic response performance and carrying capacity are achieved.

In all embodiments of the present disclosure, referring to FIG. 6, each drive assembly 60 further includes a first knuckle bearing 65 and a second knuckle bearing 66. The first connecting rod 62 and the third connecting rod 64 can be connected through the first knuckle bearing 65 to form a first spherical pair, so that the third connecting rod 64 has a relatively large motion range relative to the first connecting rod 62. The second connecting rod 63 and the third connecting rod 64 can be connected through the second knuckle bearing 66 to form a second spherical pair, so that the second connecting rod 63 has a relatively large motion range relative to the third connecting rod 64.

Referring to FIG. 5 and FIG. 6, the motors 50 are fixedly connected to the fixed platform 10. The moving parts 61 can rotate relative to the fixed platform 10. Equivalently, the moving parts 61 can be revolute pairs connected to the fixed platform 10. If "S" represents a spherical pair, and "R" represents a revolute pair, the movable platform 40 and the fixed platform 10 can be connected through one revolute pair and two spherical pairs, to form an "RSS" type structure. The drive assembly 60 that connects the movable platform 40 to the fixed platform 10 can be an "RSS" branched chain. The two drive assemblies 60 can be in a parallel relationship, so that the waist structure 100 is constituted into an "RSS" type parallel mechanism. With reference to FIG. 4 to FIG. 6, the first spherical pair and the second spherical pair can provide a relatively large motion range, to support the movable platform 40 to rotate relative to the fixed platform 10 in various postures in the two degrees of freedom, namely, the pitch angle (P1/P2) and the yaw angle (Y1/Y2), so that the waist structure 100 has a relatively large working space.

In all embodiments of the present disclosure, referring to FIG. 1 and FIG. 7, the movable platform 40 includes a support 41, two first connecting portions 42, and two second connecting portions 43. The two first connecting portions 42 can be symmetric about a center axis of the support 41, and the pitch shaft 34 can be connected to the two first connecting portions 42. The two second connecting portions 43 can be symmetric about the center axis of the support 41, and the two second connecting portions 43 can be respectively connected to the second connecting rods 63 of the two drive assemblies 60. In this way, force bearing point of the movable platform 40 can be symmetric, so that it is easy to calculate an actuating force required to be inputted by each motor 50 when the drive assembly 60 drives the movable platform 40 to move, to accurately control the movable platform 40 to move relative to the fixed platform 10.

In all embodiments of the present disclosure, referring to FIG. 1, the two second connecting portions 43 can be provided with connecting slots 431. The second connecting rods 63 extend into the connecting slots 431 and can be connected to the second connecting portions 43. In this way, the second connecting rods 63 and the second connecting portions 43 can be combined reliably, and can be difficulty separated.

In all embodiments of the present disclosure, referring to FIG. 1, the two first connecting portions 42 extend from the support 41. The first connecting portions 42 can be provided with first through holes 421. The pitch shaft 34 can be connected to the first connecting portions 42 through the first through holes 421. Specifically, the two first connecting portions 42 can be extending walls extending from the support 41. A mounting space can be formed between the two first connecting portions 42 and the support 41 and can be used for accommodating the connector 30. The pitch shaft 34 of the connector 30 penetrates through the two first through holes 421 to cause the movable platform 40 to be connected to the connector 30 and to rotate around the pitch shaft 34.

In all embodiments of the present disclosure, referring to FIG. 1 and FIG. 7, in one embodiment, the connector 30 further includes a connecting body 35. There are two pitch shafts 34. The two pitch shafts 34 respectively extend from a first side and a second side of the connecting body 35. The two pitch shafts 34 can be integrated with the body. The manufacturing process is simple. The two pitch shafts 34 extending from the first side 351 and the second side 352 of the connecting body 35 respectively penetrate through the two first through holes 421 to be respectively connected to the two first connecting portions 42. In another embodiment, there is one pitch shaft 34. The pitch shaft 34 penetrates through the first side and the second side of the body and penetrates through the two first through holes 421 respectively. In this way, different pitch shafts 34 can be removed from the connecting body 35 for replacement.

In all embodiments of the present disclosure, referring to FIG. 7, the connecting body 35 includes a third side 353 located between the first side 351 and the second side 352. The yaw shaft 33 extends from the third side. In this way, the connector 30 can be formed into a "T"-shaped structure. With reference to FIG. 1, the axial direction of the yaw shaft 33 can be consistent with a yaw axis direction, and the axial direction of the pitch shaft 34 can be consistent with a pitch axis direction. By a simple structure, the waist structure 100 has the two degrees of freedom in the pitch angle (P1/P2) direction and the yaw angle (Y1/Y2) direction, so that the manufacturing process can be simplified.

In all embodiments of the present disclosure, referring to FIG. 7, limiting portions 36 can be arranged at ends of the pitch shafts 34 away from the connecting body 35. The connector 30 further includes connecting bearings 37. The connecting bearings 37 can be arranged in the first through holes 421 and sleeve the pitch shafts 34. The limiting portions 36 can be used for limiting axial displacements of the connecting bearings 37 along the pitch shafts 34.

In all embodiments of the present disclosure, referring to FIG. 1 and FIG. 4, the fixed platform 10 includes a base 11, two mounting portions 12, and a shaft hole 13. The two mounting portions 12 can be symmetric about a center axis of the base 11. Mounting holes (which are blocked in the figure, not shown) can be formed in the mounting portions 12, and the motors 50 can be mounted in the mounting holes. The shaft hole 13 can be formed in a center of the base 11, and the load-carrying bearing 20 can be arranged in the shaft hole 13.

Specifically, the mounting portions 12 can be platy structures symmetric about the center axis of the base 11. In one embodiment, the two mounting portions 12 can be fixedly mounted on two sides of the base 11. In another embodiment, the two mounting portions 12 respectively extend from two sides of the base 11. The waist structure 100 of this embodiment of the present disclosure can adopt any one of the above embodiments, and will not be limited here.

In all embodiments of the present disclosure, referring to FIG. 1 and FIG. 4, the motors 50 can be mounted in the mounting holes and can be connected to the moving parts 61. The mounting portions 12 can be located between the motors 50 and the moving parts 61. If a space encircled by the two mounting portions 12 and the base 11 is an internal space of the fixed platform 10, and spaces outside the two mounting portions 12 opposite to the internal space can be external spaces of the fixed platform 10, the two motors 50 can be mounted in the external spaces of the fixed platform 10. The two drive assemblies 60, the movable platform 40, the connector 30, and the load-carrying bearing 20 can be all arranged in the internal space of the fixed platform 10, so that the internal space of the fixed platform 10 can be compact in structure, and it is convenient to connect the motors 50 to an external power supply device or a power line.

Referring to FIG. 4, in one embodiments of the present disclosure, the outer ring 22 of the load-carrying bearing 20 can be arranged in the shaft hole 13 and can be fixedly connected to the shaft hole 13. In another embodiment, the load-carrying bearing 20 can be arranged above the shaft hole 13. The outer ring 22 of the load-carrying bearing 20 can be fixedly connected to the base 11. The inner ring 21 of the load-carrying bearing 20 corresponds to the shaft hole 13. In this way, the load-carrying bearing 20 and the base 11 can favorably bear the gravity of the movable platform 40 and the weight of the load on the movable platform 40, so that the carrying capacity of the waist structure 100 is improved. The waist structure 100 of this embodiment of the present disclosure can adopt any one of the above embodiments, and will not be limited here.

In all embodiments of the present disclosure, referring to FIG. 5, the two motors 50 and the two drive assemblies 60 can be symmetric about the center axis C2 of the base 11. In some embodiments, the two motors 50, the two drive assemblies 60, and the two second connecting portions 43 of the movable platform 40 can be symmetric about the center axis C2 of the base 11. In this way, the structure of the waist structure 100 can be in a left and right symmetry arrangement, which can effectively ensure the symmetry of a motion space of the movable platform.

In all embodiments of the present disclosure, referring to FIG. 4, FIG. 7, and FIG. 8, the waist structure 100 further includes a pull wire module 70, configured to compensate the gravity of the movable platform 40. The pull wire module 70 includes a follower 71, a pulley assembly 72, a fixed part 73, an elastic part 74, and a pull wire 75. The follower 71 can be connected to the inner ring 21 of the load-carrying bearing 20. The pulley assembly 72 and the fixed part 73 can be arranged on the follower 71. The elastic part 74 can be connected to the fixed part 73. The pull wire 75 cooperates with the pulley assembly 72. One end of the pull wire 75 can be connected to the elastic part 74, and the other end of the pull wire 75 can be connected to the movable platform 40. In one embodiment, the elastic part 74 can be a tension spring, and the pull wire 75 can be a metal wire.

When the movable platform 40 rotates relative to the fixed platform 10 around the pitch shaft 34, the elastic part 74 can be stretched according to a degree of pitching of the movable platform 40, to provide an elastic force to compensate the gravity of the movable platform 40 and the weight of the load on the movable platform 40, that is, to provide gravity compensation to improve the carrying capacity of the waist structure 100. A stress status of the waist structure 100 during movement of the robot 1000 can be effectively improved, and the response speed can be increased. In addition, under the action of the gravity compensation of the pull wire module 70, the waist structure 100 can be stably kept in a certain posture without deformation, to improve the motion accuracy.

When the movable platform 40 rotates relative to the fixed platform 10 in the axial direction of the yaw shaft 33, the follower 71 follows the movable platform 40 to rotate relative to the fixed platform 10 in the axial direction of the yaw shaft 33. In this way, a change in a force direction of a pull force of the pull wire 75 caused by the rotation of the movable platform 40 around the yaw shaft 33 can be avoided, and motion decoupling can be achieved, so that the change of the pull force of the pull wire 75 only depends on a change in an angle of the movable platform 40 around the pitch shaft 34 (an angle change along the pitch angle (P1/P2)).

In all embodiments of the present disclosure, with reference to FIG. 7, FIG. 8, and FIG. 9, when the elastic part 74 can be in a stretched state, the gravity of the movable platform 40 can be compensated on the basis of a first distance, a second distance, an elongation of the elastic part 74, a pitch inclination angle, and a pull wire inclination angle. The first distance can be a distance between a center-of-gravity position of the movable platform 40 and an axis position of each pitch shaft 34; the second distance can be a distance between a center of gravity of a pulley 7211 of the pulley assembly 72 and an axis position of the yaw shaft 33; the pitch inclination angle can be an angle that the movable platform 40 rotates around the pitch shaft 34 relative to a center-of-gravity direction; and the pull wire inclination angle can be an inclination angle of a portion of the pull wire 75 located between the pulley 7211 and the movable platform 40 relative to a plane where the fixed platform 10 can be located.

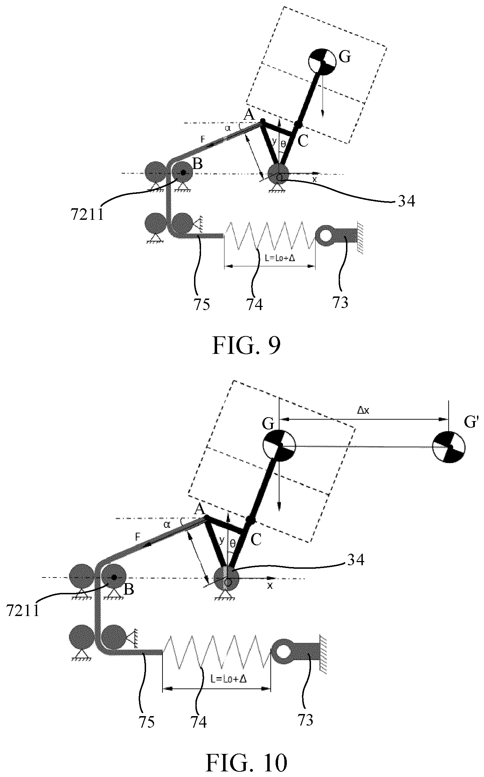

FIG. 9 is a schematic diagram of an action principle of gravity compensation achieved by the pull wire module 70 in a state that the movable platform 40 rotates around the pitch shaft 34 relative to the fixed platform 10.

Point A can be a connecting point between the pull wire 75 and the movable platform 40; point B can be the center of gravity and rotation center of the pulley 7211 in the structure of the pulley 7211; point O can be the center-of-gravity position of the pitch shaft 34; point G can be the center-of-gravity position of the movable platform 40; and point C can be a vertical point of a vertical line between point A and line segment OG. Point O may also be a point located at the axis position of the yaw shaft 33. To facilitate the following description, in this embodiment shown in FIG. 9, it is assumed that the pulley 7211 in the pulley assembly 72 has a relatively small radius. A distance between the pull wire 75 on the pulley 7211 and the rotation center of the pulley 7211 is relatively short, that is, a distance between the pull wire 75 on the pulley 7211 and point B is relatively short, so that a distance between point A and point B approximatively represents a length of the pull wire 75 between point A and point B. Or, it is assumed that the pull wire 75 passes through the rotation center B of the pulley 7211. In this way, a distance between point A and point B is a length of the pull wire 75 between point A and point B.

It is set that a length of line segment AC is la, that a distance between point C and point O is lb, that a distance between point B and point O is the second distance lc, that a distance between point G and point O can be the first distance lh, that a distance between point A and point O can be ls, that a rectangular plane coordinate system can be built by taking point O as an origin, that a yaw angle of line segment OG relative to a y axis direction of the coordinate system can be the pitch inclination angle θ, and that an included angle between line segment AB and an x axis of the coordinate system can be the pull wire inclination angle α. Thus, a rigidity k of the elastic part 74 required for gravity compensation satisfies:

$$ k = \frac{mglhsin\ \theta}{lc\triangle sin\ \alpha}; $$

where △ can be the elongation of the elastic part 74, that is, a stretched length of the elastic part 74; and mg can be an equivalent gravity of the center-of-gravity position G of the movable platform 40. In the state that the movable platform 40 rotates around the pitch shaft 34 relative to the fixed platform 10, mg will not change. Therefore, the rigidity of the elastic part 74 can be related to the first distance lh, the second distance lc, the elongation △ of the elastic part 74, the pitch inclination angle θ, and the pull wire inclination angle α. The gravity of the movable platform 40 can be compensated on the basis of the above parameters.

Specifically, point B and point O can be on the same horizontal line. It is assumed that a torque generated by the gravity mg at point O is T1, T1=mglhsinθ. It is assumed that the elastic part 74 is stretched, so that a torque provided by the pull wire module 70 at point A is T2, T2=klc△sinα. In case of T1=T2, the torque provided by the pull wire module 70 can compensate for the torque generated by the gravity mg, so that if the rigidity k of the elastic part 74 satisfies: $k = \frac{mglhsin\ \theta}{lc\triangle sin\ \alpha}$, the pull wire module 70 can realize a gravity compensation function.

Further, after the parts of the waist structure 100 are confirmed, the positions of the pulley 7211 and the connector 30 are fixed, so the second distance lc will not change. Referring to FIG. 9, $sin\ \alpha = \frac{A_y}{\sqrt{(A_x + lc) + A_y^2}}$, where $A_y$ is a coordinate of point A at the y axis, $A_y = lssin\ (arctan \frac{lb}{la} + \frac{\pi}{2} - \theta)$; $A_x$ is a coordinate of point A at the x axis, $A_x = lscos\ (arctan \frac{lb}{la} + \frac{\pi}{2} - \theta)$. After the parts of the waist structure 100 can be confirmed, the center-of-gravity position G of the movable platform 40 can be confirmed; the position of connecting point A between the pull wire 75 and the movable platform 40 can be fixed; the center-of-gravity position O of the pitch shaft 34 can be fixed; and the position of point C can be also fixed. Therefore, the distance lh between point G and point O, the distance ls between point A and point O, the distance lb between point C and point O, and the distance la between point A and point C will not change. Therefore, a size of the rigidity k of the elastic part 74 required for gravity compensation only depends on the pitch inclination angle $\theta$ and the elongation $\triangle$ of the elastic part 74. When the pitch inclination angle $\theta=90°$, the elongation $\triangle$ of the elastic part 74 can be the maximum, and the rigidity k of the elastic part 74 required for gravity compensation can be the maximum; and the pull wire module 70 can completely compensate for the gravity mg. In this way, the rigidity k of the elastic part 74 corresponding to the pitch inclination angle $\theta=90°$ is used as a rigidity baseline of the elastic part 74, to meet a gravity compensation requirement for the movable platform 40.

In all embodiments of the present disclosure, with reference with FIG. 10, when the elastic part 74 is in the stretched state, after the center-of-gravity position of the movable platform 40 skews, the gravity of the movable platform can be compensated on the basis of a third distance, the first distance, the second distance, the elongation of the elastic part 74, the pitch inclination angle, and the pull wire inclination angle; and the third distance can be a distance between the center-of-gravity position of the movable platform before skewing and the center-of-gravity position of the movable platform after skewing. After the center-of-gravity position of the movable platform 40 skews relative to the initial position, namely, point G, (the center-of-gravity position of the movable platform 40 before skewing) due to a motion or a change in the load, the center-of-gravity position of the movable platform 40 after skewing is set to be G', so that a distance between point G and G' can be $\triangle x$ (which is the third distance). In this case, the torque T1 generated by the gravity mg at point O is T1', T1'=mg(lhsin$\theta$+$\triangle$x), T1'>T1. In this case, the motor 50 provides a torque T3, T3=mg$\triangle$x, and the pull wire module 70 provides a torque T2, T2=klc$\triangle$sin$\alpha$=mglhsin$\theta$. The gravity compensation can be achieved by combining the torque T2 and the torque T3, T2+T3=T1'. That is, in this case, the structure of the pull wire 75 can still provide part of the gravity compensation, to improve the stress status of the waist structure 100 and improve the motion response speed and the motion accuracy.

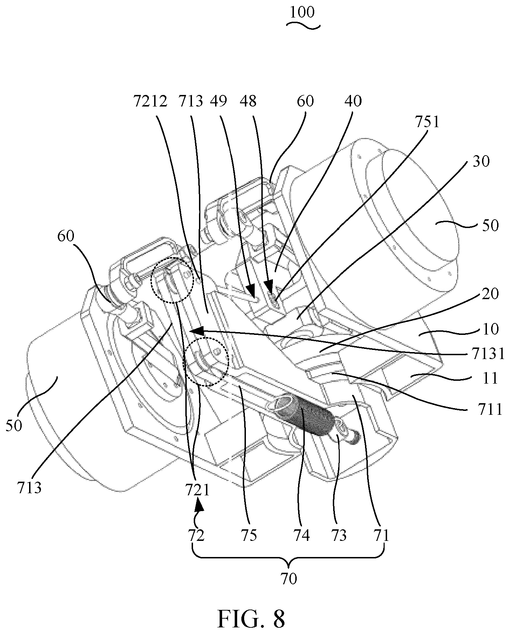

In all embodiments of the present disclosure, referring to FIG. 8, a receiving space 48 and a pull wire hole 49 can be formed in the movable platform 40. The pull wire 75 includes a pull wire head 751. The pull wire head 751 can be received in the receiving space 48, and the pull wire 75 can be led out from the pull wire hole 49. In this way, the receiving space 48 can play a role of protecting the pull wire head 751.

In all embodiments of the present disclosure, referring to FIG. 4 and FIG. 8, the follower 71 includes a following portion 711, a fixing portion 712, and an extending portion 713. The following portion 711 can be connected to the inner ring 21 of the load-carrying bearing 20. Specifically, the connector 30 and the following portion 711 can be respectively connected to two sides, facing away from each other, of the inner ring 21 of the load-carrying bearing 20. A fixing hole 7121 can be formed in the fixing portion 712, and the fixed part 73 can be mounted in the fixing hole 7121. The pulley assembly 72 can be arranged at the extending portion 713.

In all embodiments of the present disclosure, referring to FIG. 4, the follower 71 includes two extending portions 713 spaced from each other; a pulley slot 7131 can be formed between the two extending portions 713; and each extending portion 713 can be provided with a pin hole 7132. The pulley assembly 72 includes two pulley systems 721, and the two pulley systems 721 can be arranged at the extending portions 713 in a spaced manner. With reference to FIG. 9, the pulley systems 721 include pulleys 7211, spacers (not shown), and pins 7212. The pulleys 7211 can be arranged between the two extending portions 713. The pins 7212 penetrate through the pin holes 7132 and the pulleys 7211. The spacers can be arranged between the pulleys 7211 and the extending portions 713. Referring to FIG. 9, the center-of-gravity position of the pulley 7211 of the topmost pulley system 721 of the two pulley systems 721 corresponds to point B in FIG. 9, and the center-of-gravity position of the pulley 7211 and the center-of-gravity position of the pitch shaft 34 can be on the same horizontal line.

Referring to FIG. 2, the embodiments of the present disclosure provide a robot 1000. The robot 1000 includes the waist structure 100 according to any one of the above implementations, a body structure 300, and a lower limb structure 400. The body structure 300 can be connected to the movable platform 40. The lower limb structure 400 can be connected to the fixed platform 10. By using the waist structure 100 in the parallel "RSS" form to connect the body structure 300 to the lower limb structure 400, the robot 1000 provided by this embodiment of the present disclosure can achieve motions of an upper limb structure 200 relative to the lower limb structure 400 in two degrees of freedom, namely, in a pitch angle (P1/P2) direction and a yaw angle (Y1/Y2) direction, so that the robot 1000 has relatively high load-carrying capacity and relatively good drive capacity.

In the foregoing embodiments, description of each embodiment focuses on a different part, and for parts that are not described in detail in one embodiment, refer to the related description of other embodiments.

In the descriptions of the embodiments of the present disclosure, specific features, structures, materials, or characteristics may be combined in a proper manner in any one or more of the embodiments or examples.

**Claims**

1. A waist structure (100) of a robot (1000), comprising:

    a fixed platform (10);

a load-carrying bearing (20) arranged on the fixed platform (10);

a connector (30) comprising a first end (31) and a second end (32) facing away from each other, the first end (31) being provided with a yaw shaft (33), the yaw shaft (33) being connected to an inner ring (21) of the load-carrying bearing (20), and the second end (32) being provided with a pitch shaft (34);

a movable platform (40) rotatably connected to the pitch shaft (34);

two motors (50) arranged on the fixed platform (10); and

two drive assemblies (60), each drive assembly (60) corresponding to one motor (50), and the drive assemblies (60) being connected to the movable platform (40) and the corresponding motors (50);

wherein the motors (50) are configured to actuate the drive assemblies (60) to do a circumferential motion, to drive the movable platform (40) to rotate relative to the connector (30) in an axial direction of the pitch shaft (34), and actuating the corresponding drive assemblies (60) to drive the movable platform (40) and the connector (30) to rotate relative to the fixed platform (10) in an axial direction of the yaw shaft (33).

2. The waist structure (100) of the robot (1000) according to claim 1, wherein the two motors (50) respectively and independently actuate the corresponding drive assemblies (60) to move;

when the two motors (50) synchronously rotate in a same direction, the two motors (50) are configured to actuate the corresponding drive assemblies (60) to drive the movable platform (40) to rotate relative to the connector (30) in the axial direction of the pitch shaft (34); and

when rotation directions of the two motors (50) are different, the two motors (50) are configured to actuate the corresponding drive assemblies (60) to drive the movable platform (40) and the connector (30) to rotate relative to the fixed platform (10) in the axial direction of the yaw shaft (33).

3. The waist structure (100) of the robot (1000) according to claim 2, wherein when speeds of the two motors (50) are different, the two motors (50) are configured to actuate the corresponding drive assemblies (60) to drive the movable platform (40) to rotate relative to the connector (30) in the axial direction of the pitch shaft (34), and actuate the corresponding drive assemblies (60) to drive the movable platform (40) and the connector (30) to rotate relative to the fixed platform (10) in the axial direction of the yaw shaft (33).

4. The waist structure (100) of the robot (1000) according to claim 2 or 3, wherein when rotation directions of the two motors (50) are the same and speeds of the two motors (50) are different, the two motors (50) are configured to actuate the corresponding drive assemblies (60) to drive the movable platform (40) to rotate relative to the connector (30) in the axial direction of the pitch shaft (34), and the two motors (50) actuate the corresponding drive assemblies (60) to drive the movable platform (40) and the connector (30) to rotate relative to the fixed platform (10) in the axial direction of the yaw shaft (33).

5. The waist structure (100) of the robot (1000) according to claim 2 or 3, wherein when rotation directions of the motors (50) are different and speeds of the two motors (50) are different, the two motors (50) are configured to actuate the corresponding drive assemblies (60) to drive the movable platform (40) to rotate relative to the connector (30) in the axial direction of the pitch shaft (34), and the two motors (50) actuate the corresponding drive assemblies (60) to drive the movable platform (40) and the connector (30) to rotate relative to the fixed platform (10) in the axial direction of the yaw shaft (33).

6. The waist structure of the robot according to any one of claims 1 to 5, wherein each drive assembly (60) comprises:

a moving part (61) connected to the corresponding motor (50) to form a revolute pair;
a first connecting rod (62) connected to the moving part (61);
a second connecting rod (63) connected to the movable platform (40); and
a third connecting rod (64) connected and arranged between the first connecting rod (62) and the second connecting rod (63) and is connected to the first connecting rod (62) and the second connecting rod (63);
wherein each drive assembly (60) further comprises a first knuckle bearing (65) and a second knuckle bearing (66); the first connecting rod (62) and the third connecting rod (64) are connected through the first knuckle bearing (65) to form a first spherical pair; and the second connecting rod (63) and the third connecting rod (64) are connected through the second knuckle bearing (66) to form a second spherical pair.

7. The waist structure (100) of the robot (1000) according to claim 6, wherein the movable platform (40) comprises:

a support (41);
two first connecting portions (42) being symmetric about a center axis of the support (41), the pitch shaft (34) being connected to the two first connecting portions (42); and

two second connecting portions (43) being symmetric about the center axis of the support (41), wherein the two second connecting portions (43) are respectively connected to the second connecting rods (63) of the two drive assemblies (60);

wherein the two first connecting portions (42) extend from the support (41); the first connecting portions (42) are provided with a first through hole (421); and the pitch shaft (34) is connected to the first connecting portions (42) through the first through hole (421);

wherein the connector (30) further comprises a connecting body (35); and there are two pitch shafts (34) which extend respectively from a first side and a second side of the connecting body (35) and respectively penetrate through two of the first through holes (421);

wherein limiting portions (36) are provided at ends of the pitch shafts (34) away from the connecting body (35); the connector (30) further comprises connecting bearings (37); the connecting bearings (37) are provided in the first through holes (421) and sleeve the pitch shafts (34); and the limiting portions (36) are configured to limit axial displacements of the connecting bearings (37) along the pitch shafts (34).

8. The waist structure (100) of the robot (1000) according to claim 7, wherein the two second connecting portions (43) are provided with connecting slots (431); and the second connecting rods (63) extend into the connecting slots (431) and are connected to the second connecting portions (43).

9. The waist structure (100) of the robot (1000) according to any one of claims 1 to 8, wherein the fixed platform (10) comprises:

a base (11);
two mounting portions (12), the two mounting portions (12) being symmetric about a center axis of the base (11), mounting holes being formed in the mounting portions (12), and the motors (50) being mounted in the mounting holes; and
a shaft hole (13) formed in a center of the base (11), the load-carrying bearing (20) being arranged in the shaft hole (13).

10. The waist structure (100) of the robot (1000) according to any one of claims 1 to 9, wherein the waist structure (100) further comprises a pull wire module (70), configured to compensate the gravity of the movable platform (40); and the pull wire module (70) comprises:

a follower (71) connected to the inner ring (21) of the load-carrying bearing (20);
a pulley assembly (72) arranged on the follower (71);
a fixed part (73) arranged on the follower (71);
an elastic part (74) fixedly connected to the fixed part (73); and
a pull wire (75) cooperating with the pulley assembly (72), one end of the pull wire (75) being connected to the elastic part (74), and the other end of the pull wire (75) being connected to the movable platform (40), wherein
the follower (71) is configured to rotate around the yaw shaft (34) relative to the fixed platform (10) when the movable platform (40) rotates around the yaw shaft (33) relative to the fixed platform (10).

11. The waist structure (100) of the robot (1000) according to claim 10, wherein when the elastic part (74) is in a stretched state, the gravity of the movable platform (40) is compensated on the basis of a first distance, a second distance, an elongation of the elastic part (&4), a pitch inclination angle, and a pull wire inclination angle; the first distance is a distance between a center-of-gravity position of the movable platform (40) and an axis position of each pitch shaft (34); the second distance is a distance between a center of gravity of a pulley (7211) of the pulley assembly (72) and an axis position of the yaw shaft (33); the pitch inclination angle is an angle that the movable platform (40) rotates around the pitch shaft (34) relative to a center-of-gravity direction; and the pull wire inclination angle is an inclination angle of a portion of the pull wire (75) located between the pulley (7211) and the movable platform (40) relative to a plane where the fixed platform (10) is located; wherein when the elastic part (74) is in the stretched state, after the center-of-gravity position of the movable platform (40) shifts, the gravity of the movable platform (40) is compensated on the basis of a third distance, the first distance, the second distance, the elongation of the elastic part (74), the pitch inclination angle, and the pull wire inclination angle; and the third distance is a distance between the center-of-gravity position of the movable platform (40) before shifting and the center-of-gravity position of the movable platform (40) after skewing.

12. The waist structure (100) of the robot (1000) according to claim 10, wherein a receiving space (48) and a pull wire hole (49) are formed in the movable platform (40); the pull wire (75) comprises a pull wire head (751); the pull wire head (751) is received in the receiving space (48); and the pull wire (75) is led out from the pull wire hole (49).

13. The waist structure (100) of the robot (1000) according to claim 10, wherein the follower (71) comprises:

    a following portion (711) connected to the inner ring (21)of the load-carrying bearing (20);
    a fixing portion (712) provided with a fixing hole (7121) , the fixed part (73) being mounted in the fixing hole (7121); and
    an extending portion (713), the pulley assembly (72) being arranged at the extending portion (713).

14. The waist structure (100) of the robot (1000) according to claim 12, wherein the follower (71) comprises two extending portions (713) spaced from each other; a pulley slot (7131) is formed between the two extending portions (713); each extending portion (713) is provided with a pin hole (7132); the pulley assembly (72) comprises two pulley systems (721); the two pulley systems (721) are arranged at the extending portions (713) in a spaced manner; the pulley systems (721) comprise pulleys (7211), spacers, and pins (7212); the pulleys (7211) are arranged between the two extending portions (713); the pins (7212) penetrate through the pin holes (7132) and the pulleys (7211); and the spacers are arranged between the pulleys (7211) and the extending portions (713).

15. A robot (1000), comprising:

    the waist structure (100) according to any one of claims 1 to 14;
    a body structure (300) connected to the movable platform (40) of the waist structure (100); and
    a lower limb structure (400) connected to the fixed platform (10) of the waist structure (100).

**Patentansprüche**

1. Taillenstruktur (100) eines Roboters (1000), umfassend,

    eine feste Plattform (10);
    ein lasttragendes Lager (20), das auf der festen Plattform (10) angeordnet ist;
    einen Verbinder (30), der ein erstes Ende (31) und ein zweites Ende (32) umfasst, die voneinander abgewandt sind, wobei das erste Ende (31) mit einer Gierwelle (33) versehen ist, wobei die Gierwelle (33) mit einem inneren Ring (21) des lasttragenden Lagers (20) verbunden ist und das zweite Ende (32) mit einer Nickwelle (34) versehen ist;
    eine bewegliche Plattform (40), die drehbar mit der Nickwelle (34) verbunden ist;
    zwei Motoren (50), die an der festen Plattform (10) angeordnet sind; und

zwei Antriebsanordnungen (60), wobei jede Antriebsanordnung (60) einem Motor (50) entspricht, und die Antriebsanordnungen (60) mit der beweglichen Plattform (40) und den entsprechenden Motoren (50) verbunden sind;
    wobei die Motoren (50) dazu ausgestaltet sind, die Antriebsanordnungen (60) zu betätigen, um eine Umfangsbewegung zu vollziehen, um die bewegliche Plattform (40) anzutreiben, um sich in Bezug auf den Verbinder (30) in einer axialen Richtung der Nickwelle (34) zu drehen, und die entsprechenden Antriebsanordnungen (60) zu betätigen, um die bewegliche Plattform (40) und den Verbinder (30) anzutreiben, um sich in Bezug auf die feste Plattform (10) in einer axialen Richtung der Gierwelle (33) zu drehen.

2. Taillenstruktur (100) eines Roboters (1000) nach Anspruch 1, wobei die zwei Motoren (50) jeweils und unabhängig die entsprechenden Antriebsanordnungen (60) betätigen, um sich zu bewegen;

    die zwei Motoren (50) dazu ausgestaltet sind, wenn die zwei Motoren (50) sich synchron in einer gleichen Richtung drehen, die entsprechenden Antriebsanordnungen (60) zu betätigen, um die bewegliche Plattform (40) anzutreiben, um sich in Bezug auf den Verbinder (30) in der axialen Richtung der Nickwelle (34) zu drehen; und
    die zwei Motoren (50) dazu ausgestaltet sind, wenn Drehrichtungen der zwei Motoren (50) sich voneinander unterscheiden, die entsprechenden Antriebsanordnungen (60) zu betätigen, um die bewegliche Plattform (40) und den Verbinder (30) anzutreiben, um sich in Bezug auf die feste Plattform (10) in der axialen Richtung der Gierwelle (33) zu drehen.

3. Taillenstruktur (100) eines Roboters (1000) nach Anspruch 2, wobei die zwei Motoren (50) dazu ausgestaltet sind, wenn Drehzahlen der zwei Motoren (50) sich voneinander unterscheiden, die entsprechenden Antriebsanordnungen (60) zu betätigen, um die bewegliche Plattform (40) anzutreiben, um sich in Bezug auf den Verbinder (30) in der axialen Richtung der Nickwelle (34) zu drehen, und die entsprechenden Antriebsanordnungen (60) zu betätigen, um die bewegliche Plattform (40) und den Verbinder (30) anzutreiben, um sich in Bezug auf die feste Plattform (10) in der axialen Richtung der Gierwelle (33) zu drehen.

4. Taillenstruktur (100) eines Roboters (1000) nach Anspruch 2 oder 3, wobei die zwei Motoren (50) dazu ausgestaltet sind, wenn Drehrichtungen der zwei Motoren (50) gleich sind und Drehzahlen der zwei Motoren (50) sich voneinander unterscheiden, die entsprechenden Antriebsanordnungen (60) zu betätigen, um die bewegliche Plattform (40) anzutreiben, um sich in Bezug auf den Verbinder (30) in der axialen Richtung der Nickwelle (34) zu drehen, und die zwei Motoren (50) die entsprechenden Antriebsanordnungen (60) betätigen, um die bewegliche Plattform (40) und den Verbinder (30) anzutreiben, um sich in Bezug auf die feste Plattform (10) in der axialen Richtung der Gierwelle (33) zu drehen.

5. Taillenstruktur (100) eines Roboters (1000) nach Anspruch 2 oder 3, wobei die zwei Motoren (50) dazu ausgestaltet sind, wenn Drehrichtungen der Motoren (50) sich voneinander unterscheiden und Drehzahlen der zwei Motoren (50) sich voneinander unterscheiden, die entsprechenden Antriebsanordnungen (60) zu betätigen, um die bewegliche Plattform (40) anzutreiben, um sich in Bezug auf den Verbinder (30) in der axialen Richtung der Nickwelle (34) zu drehen, und die zwei Motoren (50) die entsprechenden Antriebsanordnungen (60) betätigen, um die bewegliche Plattform (40) und den Verbinder (30) anzutreiben, um sich in Bezug auf die feste Plattform (10) in der axialen Richtung der Gierwelle (33) zu drehen.

6. Taillenstruktur eines Roboters nach einem der Ansprüche 1 bis 5, wobei jede Antriebsanordnung (60) umfasst:

einen Bewegungsteil (61), der mit dem entsprechenden Motor (50) verbunden ist, um ein Drehpaar zu bilden;
eine erste Verbindungsstange (62), die mit dem Bewegungsteil (61) verbunden ist;
eine zweite Verbindungsstange (63), die mit der beweglichen Plattform (40) verbunden ist; und
eine dritte Verbindungsstange (64), die zwischen der ersten Verbindungsstange (62) und der zweiten Verbindungsstange (63) verbunden und angeordnet ist und mit der ersten Verbindungsstange (62) und der zweiten Verbindungsstange (63) verbunden ist;
wobei jede Antriebsanordnung (60) ferner ein erstes Gelenklager (65) und ein zweites Gelenklager (66) umfasst; die erste Verbindungsstange (62) und die dritte Verbindungsstange (64) durch das erste Gelenklager (65) verbunden sind, um ein erstes kugelförmiges Paar zu bilden; und die zweite Verbindungsstange (63) und die dritte Verbindungsstange (64) durch das zweite Gelenklager (66) verbunden sind, um ein zweites kugelförmiges Paar zu bilden.

7. Taillenstruktur (100) eines Roboters (1000) nach Anspruch 6, wobei die bewegliche Plattform (40) umfasst:

eine Stütze (41);
zwei erste Verbindungsabschnitte (42), die um eine Mittelachse der Stütze (41) herum symmetrisch sind, wobei die Nickwelle (34) mit den zwei ersten Verbindungsabschnitten (42) verbunden ist; und
zwei zweite Verbindungsabschnitte (43), die um die Mittelachse der Stütze (41) herum symmetrisch sind, wobei die zwei zweiten Verbindungsabschnitte (43) jeweils mit den zweiten Verbindungsstangen (63) der zwei Antriebsanordnungen (60) verbunden sind;
wobei die zwei ersten Verbindungsabschnitte (42) sich von der Stütze (41) erstrecken; die ersten Verbindungsabschnitte (42) mit einem ersten Durchgangsloch (421) versehen sind; und die Nickwelle (34) mit den ersten Verbindungsabschnitten (42) durch das erste Durchgangsloch (421) verbunden ist;
wobei der Verbinder (30) ferner einen Verbindungskörper (35) umfasst; und zwei Nickwellen (34) vorhanden sind, die sich jeweils von einer ersten Seite und einer zweiten Seite des Verbindungskörpers (35) erstrecken und jeweils durch zwei der ersten Durchgangslöcher (421) eindringen;
wobei Begrenzungsabschnitte (36) an Enden der Nickwellen (34), die von dem Verbindungskörper (35) abgewandt sind, bereitgestellt sind; der Verbinder (30) ferner Verbindungslager (37) umfasst; die Verbindungslager (37) in den ersten Durchgangslöchern (421) bereitgestellt sind und die Nickwellen (34) überhülsen; und die Begrenzungsabschnitte (36) dazu ausgestaltet sind, axiale Verlagerungen der Verbindungslager (37) entlang der Nickwellen (34) zu begrenzen.

8. Taillenstruktur (100) eines Roboters (1000) nach Anspruch 7, wobei die zwei zweiten Verbindungsabschnitte (43) mit Verbindungsschlitzen (431) versehen sind; und die zweiten Verbindungsstangen (63) sich in die Verbindungsschlitze (431) erstrecken und mit den zweiten Verbindungsabschnitten (43) verbunden sind.

9. Taillenstruktur (100) eines Roboters (1000) nach einem der Ansprüche 1 bis 8, wobei die feste Plattform (10) umfasst:

eine Basis (11);
zwei Montageabschnitte (12), wobei die zwei Montageabschnitte (12) um eine Mittelachse der Basis (11) herum symmetrisch sind, Montagelöcher in den Montageabschnitten (12) gebildet sind und die Motoren (50) in den Montagelöchern montiert sind; und
ein Wellenloch (13), das in einer Mitte der Basis (11) gebildet ist, wobei das lasttragende Lager (20) in dem Wellenloch (13) angeordnet ist.

10. Taillenstruktur (100) eines Roboters (1000) nach einem der Ansprüche 1 bis 9, wobei die Taillenstruktur (100) ferner ein Zugdrahtmodul (70) umfasst, das dazu ausgestaltet ist, die Schwerkraft der beweglichen Plattform (40) auszugleichen; und das Zugdrahtmodul (70) umfasst:

ein Folgeglied (71), das mit dem inneren Ring (21) des lasttragenden Lagers (20) verbunden ist;
eine Rollenanordnung (72), die auf dem Folgeglied (71) angeordnet ist;
einen festen Teil (73), der auf dem Folgeglied (71) angeordnet ist;
einen elastischen Teil (74), der fest mit dem festen Teil (73) verbunden ist; und
einen Zugdraht (75), der mit der Rollenanordnung (72) zusammenwirkt, wobei ein Ende des Zugdrahts (75) mit dem elastischen Teil (74) verbunden ist und das andere Ende des Zugdrahts (75) mit der beweglichen Plattform (40) verbunden ist, wobei
das Folgeglied (71) dazu ausgestaltet ist, sich um die Gierwelle (34) herum in Bezug auf die feste Plattform (10) zu drehen, wenn die bewegliche Plattform (40) sich um die Gierwelle (33) herum in Bezug auf die feste Plattform (10) dreht.

11. Taillenstruktur (100) eines Roboters (1000) nach Anspruch 10, wobei, wenn der elastische Teil (74) sich in einem gestreckten Zustand befindet, die Schwerkraft der beweglichen Plattform (40) auf der Grundlage eines ersten Abstands, eines zweiten Abstands, einer Dehnung des elastischen Teils (74), eines Nickneigungswinkels und eines Zugdraht-Neigungswinkels ausgeglichen wird; der erste Abstand ein Abstand zwischen einer Schwerpunktposition der beweglichen Plattform (40) und einer Achsenposition jeder Neigungswelle (34) ist; der zweite Abstand ein Abstand zwischen einem Schwerpunkt einer Rolle (7211) der Rollenanordnung (72) und einer Achsenposition der Gierwelle (33) ist; der Nickneigungswinkel ein Winkel ist, um den die bewegliche Plattform (40) sich um die Nickwelle (34) herum in Bezug auf eine Schwerkraftrichtung dreht; und der Zugdraht-Neigungswinkel ein Neigungswinkel eines Abschnitts des Zugdrahts (75), der sich zwischen der Rolle (7211) und der beweglichen Plattform (40) befindet, in Bezug auf eine Ebene ist, in der die feste Plattform (10) sich befindet;
wobei, wenn der elastische Teil (74) sich in dem gestreckten Zustand befindet, nachdem die Schwerpunktposition der beweglichen Plattform (40) sich verschoben hat, die Schwerkraft der beweglichen Plattform (40) auf der Grundlage eines dritten Abstands, des ersten Abstands, des zweiten Abstands, der Dehnung des elastischen Teils (74), des Nickneigungswinkels und des Zugdraht-Neigungswinkels ausgeglichen wird; und der dritte Abstand ein Abstand zwischen der Schwerpunktposition der beweglichen Plattform (40) vor dem Verschieben und der Schwerpunktposition der beweglichen Plattform (40) nach dem Schrägstellen ist.

12. Taillenstruktur (100) eines Roboters (1000) nach Anspruch 10, wobei ein Aufnahmeraum (48) und ein Zugdrahtloch (49) in der beweglichen Plattform (40) gebildet sind; der Zugdraht (75) einen Zugdrahtkopf (751) umfasst; der Zugdrahtkopf (751) in dem Aufnahmeraum (48) aufgenommen ist und der Zugdraht (75) von dem Zugdrahtloch (49) herausgeführt wird.

13. Taillenstruktur (100) eines Roboters (1000) nach Anspruch 10, wobei das Folgeglied (71) umfasst:

einen Folgeabschnitt (711), der mit dem inneren Ring (21) des lasttragenden Lagers (20) verbunden ist;
einen Befestigungsabschnitt (712), der mit einem Befestigungsloch (7121) versehen ist, wobei der feste Teil (73) in dem Befestigungsloch (7121) montiert ist; und
einen sich erstreckenden Abschnitt (713), wobei die Rollenanordnung (72) an dem sich erstreckenden Abschnitt (713) angeordnet ist.

14. Taillenstruktur (100) eines Roboters (1000) nach Anspruch 12, wobei das Folgeglied (71) zwei sich erstreckende Abschnitte (713) umfasst, die voneinander beabstandet sind; ein Rollenschlitz (7131) zwischen den zwei sich erstreckenden Abschnitten (713) gebildet ist; jeder sich erstreckende Abschnitt (713) mit einem Stiftloch (7132) versehen ist; die Rollenanordnung (72) zwei Rollensysteme (721) umfasst; die zwei Rollensysteme (721) auf eine beabstandete Weise an den sich erstreckenden Abschnitten (713) angeordnet sind; die Rollensysteme (721) Rollen (7211), Abstandshalter und Stifte (7212) umfassen; die Rollen (7211) zwischen den zwei sich erstreckenden Abschnitten (713) angeordnet sind; die Stifte (7212) durch die Stiftlöcher (7132) und die Rollen (7211) eindringen; und die Abstandshalter zwischen den Rollen (7211) und den sich erstreckenden Abschnitten (713) angeordnet sind.

15. Roboter (1000), umfassend:

die Taillenstruktur (100) nach einem der Ansprüche 1 bis 14;
eine Körperstruktur (300), die mit der beweglichen Plattform (40) der Taillenstruktur (100) verbunden ist; und

eine untere Extremitätenstruktur (400), die mit der festen Plattform (10) der Taillenstruktur (100) verbunden ist.

## Revendications

1. Structure de taille (100) d'un robot (1000) comprenant :

une plateforme fixe (10) ;

un palier de support de charge (20) agencé sur la plateforme fixe (10) ;

un connecteur (30) comprenant une première extrémité (31) et une seconde extrémité (32) orientées à l'opposé l'une de l'autre, la première extrémité (31) étant prévue avec un arbre de lacet (33), l'arbre de lacet (33) étant raccordé à une bague interne (21) du palier de support de charge (20) et la seconde extrémité (32) étant prévue avec un arbre de tangage (34) ;

une plateforme mobile (40) raccordée, de manière rotative, à l'arbre de tangage (34) ;

deux moteurs (50) agencés sur la plateforme fixe (10) ; et

deux ensembles d'entraînement (60), chaque ensemble d'entraînement (60) correspondant à un moteur (50), et les ensembles d'entraînement (60) étant raccordés à la plateforme mobile (40) et aux moteurs (50) correspondants ;

dans laquelle les moteurs (50) sont configurés pour actionner les ensembles d'entraînement (60) afin de réaliser un mouvement circonférentiel, pour entraîner la plateforme mobile (40) à tourner par rapport au connecteur (30) dans une direction axiale de l'arbre de tangage (34) et actionnant les ensembles d'entraînement (60) correspondants pour entraîner la plateforme mobile (40) et le connecteur (30) à tourner par rapport à la plateforme fixe (10) dans une direction axiale de l'arbre de lacet (33).

2. Structure de taille (100) d'un robot (1000) selon la revendication 1, dans laquelle les deux moteurs (50) actionnent respectivement et indépendamment les ensembles d'entraînement (60) correspondants pour qu'ils se déplacent ;

lorsque les deux moteurs (50) tournent, de manière synchrone, dans une même direction, les deux moteurs (50) sont configurés pour actionner les ensembles d'entraînement (60) correspondants afin qu'ils entraînent la plateforme mobile (40) à tourner par rapport au connecteur (30) dans la direction axiale de l'arbre de tangage (34) ; et

lorsque les directions de rotation des deux moteurs (50) sont différentes, les deux moteurs (50) sont configurés pour actionner les ensembles d'entraînement (60) correspondants afin qu'ils entraînent la plateforme mobile (40) et le connecteur (30) à tourner par rapport à la plateforme fixe (10) dans la direction axiale de l'arbre de lacet (33).

3. Structure de taille (100) d'un robot (1000) selon la revendication 2, dans laquelle lorsque les vitesses des deux moteurs (50) sont différentes, les deux moteurs (50) sont configurés pour actionner les ensembles d'entraînement (60) correspondants afin d'entraîner la plateforme mobile (40) pour qu'elle tourne par rapport au connecteur (30) dans la direction axiale de l'arbre de tangage (34) et actionner les ensembles d'entraînement (60) correspondants afin d'entraîner la plateforme mobile (40) et le connecteur (30) pour qu'ils tournent par rapport à la plateforme fixe (10) dans la direction axiale de l'arbre de lacet (33).

4. Structure de taille (100) d'un robot (1000) selon la revendication 2 ou 3, dans laquelle lorsque les directions de rotation des deux moteurs (50) sont les mêmes et que les vitesses des deux moteurs (50) sont différentes, les deux moteurs (50) sont configurés pour actionner les ensembles d'entraînement (60) correspondants afin d'entraîner la plateforme mobile (40) pour qu'elle tourne par rapport au connecteur (30) dans la direction axiale de l'arbre de tangage (34), et les deux moteurs (50) actionnent les ensembles d'entraînement (60) correspondants afin d'entraîner la plateforme mobile (40) et le connecteur (30) pour qu'ils tournent par rapport à la plateforme fixe (10) dans la direction axiale de l'arbre de lacet (33).

5. Structure de taille (100) d'un robot (1000) selon la revendication 2 ou 3, dans laquelle lorsque les directions de rotation des moteurs (50) sont différentes et que les vitesses des deux moteurs (50) sont différentes, les deux moteurs (50) sont configurés pour actionner les ensembles d'entraînement (60) correspondants afin d'entraîner la plateforme mobile (40) pour qu'elle tourne par rapport au connecteur (30) dans la direction axiale de l'arbre de tangage (34) et les deux moteurs (50) actionnent les ensembles d'entraînement (60) correspondants afin d'entraîner la plateforme mobile (40) et le connecteur (30) pour qu'ils tournent par rapport à la plateforme fixe (10) dans la direction axiale de l'arbre de lacet (33).

6. Structure de taille du robot selon l'une quelconque des revendications 1 à 5, dans laquelle chaque ensemble d'entraînement (60) comprend :

une partie mobile (61) raccordée au moteur (50) correspondant afin de former une paire rotoïde ;

une première tige de raccordement (62) raccordée à la partie mobile (61) ;

une deuxième tige de raccordement (63) raccordée à la plateforme mobile (40) ; et

une troisième tige de raccordement (64) raccordée et agencée entre la première tige de raccordement (62) et la deuxième tige de raccordement (63) et est raccordée à la première tige de raccordement (62) et à la deuxième tige de raccordement (63) ;

dans laquelle chaque ensemble d'entraînement (60) comprend en outre un premier palier de joint d'articulation (65) et un second palier de joint d'articulation (66) ; la première tige de raccordement (62) et la troisième tige de raccordement (64) sont raccordées par le biais du premier palier de joint d'articulation (65) afin de former une première paire sphérique ; et la deuxième tige de raccordement (63) et la troisième tige de raccordement (64) sont raccordées par le biais du deuxième palier de joint d'articulation (66) afin de former une seconde paire sphérique.

7. Structure de taille (100) d'un robot (1000) selon la revendication 6, dans laquelle la plateforme mobile (40) comprend :

un support (41) ;

deux premières parties de raccordement (42) qui sont symétriques autour d'un axe central du support (41), l'arbre de tangage (34) étant raccordé aux deux premières parties de raccordement (42) ; et

deux secondes parties de raccordement (43) qui sont symétriques autour de l'axe central du support (41), dans laquelle les deux secondes parties de raccordement (43) sont respectivement raccordées aux deuxièmes tiges de raccordement (63) des deux ensembles d'entraînement (60) ;

dans laquelle les deux premières parties de raccordement (42) s'étendent à partir du support (41) ; les premières parties de raccordement (42) sont prévues avec un premier trou débouchant (421) ; et l'arbre de tangage (34) est raccordé aux premières parties de raccordement (42) par le biais du premier trou débouchant (421) ;

dans laquelle le connecteur (30) comprend en outre un corps de raccordement (35) ; et il y a deux arbres de tangage (34) qui s'étendent respectivement à partir d'un premier côté et d'un second côté du corps de raccordement (35) et pénètrent respectivement à travers deux des premiers trous débouchants (421) ;

dans laquelle des parties de limitation (36) sont prévues aux extrémités des arbres de tangage (34) à l'opposé du corps de raccordement (35) ; le connecteur (30) comprend en outre des paliers de raccordement (37) ; les paliers de raccordement (37) sont prévus dans les premiers trous débouchants (421) et emmanchent les arbres de tangage (34) ; et les parties de limitation (36) sont configurées pour limiter les déplacements axiaux des paliers de raccordement (37) le long des arbres de tangage (34).

8. Structure de taille (100) d'un robot (1000) selon la revendication 7, dans laquelle les deux secondes parties de raccordement (43) sont prévues avec des fentes de raccordement (431) ; et les deuxièmes tiges de raccordement (63) s'étendent dans les fentes de raccordement (431) et sont raccordées aux secondes parties de raccordement (43).

9. Structure de taille (100) d'un robot (1000) selon l'une quelconque des revendications 1 à 8, dans laquelle la plateforme fixe (10) comprend :

une base (11) ;

deux parties de montage (12), les deux parties de montage (12) étant symétriques autour d'un axe central de la base (11), des trous de montage étant formés dans les parties de montage (12) et les moteurs (50) étant montés dans les trous de montage ; et

un trou d'arbre (13) formé dans un centre de la base (11), le palier de support de charge (20) étant agencé dans le trou d'arbre (13).

10. Structure de taille (100) d'un robot (1000) selon l'une quelconque des revendications 1 à 9, dans laquelle la structure de taille (100) comprend en outre un module de fil de traction (70) configuré pour compenser la gravité de la plateforme mobile (40) ; et le module de fil de traction (70) comprend :

un suiveur (71) raccordé à la bague interne (21) du palier de support de charge (20) ;

un ensemble de poulie (72) agencé sur le suiveur (71) ;

une partie fixe (73) agencée sur le suiveur (71) ;

une partie élastique (74) fixement raccordée à la partie fixe (73) ; et

un fil de traction (75) coopérant avec l'ensemble de poulie (72), une extrémité du fil de traction (75) étant raccordée à la partie élastique (74) et l'autre extrémité du fil de traction (75) étant raccordée à la plateforme mobile (40), dans laquelle :

le suiveur (71) est configuré pour tourner autour de l'arbre de lacet (34) par rapport à la plateforme fixe (10) lorsque la plateforme mobile (40) tourne autour de l'arbre de lacet (33) par rapport à la plateforme fixe (10).

11. Structure de taille (100) d'un robot (1000) selon la revendication 10, dans laquelle lorsque la partie élastique (74) est dans un état étiré, la gravité de la plateforme mobile (40) est compensée sur la base d'une première distance, d'une deuxième distance, d'un allongement de la partie élastique (74), d'un angle d'inclinaison de tangage, et d'un angle d'inclinaison de fil de traction ; la première distance est une distance entre une position de centre de gravité de la plateforme mobile (40) et une position d'axe de chaque arbre de tangage (34) ; la deuxième distance est une distance entre un centre de gravité d'une poulie (7211) de l'ensemble de poulie (72) et une position d'axe de l'arbre de lacet (33) ; l'angle d'inclinaison de tangage est un angle selon lequel la plateforme mobile (40) tourne autour de l'arbre de tangage (34) par rapport à une direction de centre de gravité ; et l'angle d'inclinaison de fil de traction est un angle d'inclinaison d'une partie du fil de traction (75) positionnée entre la poulie (7211) et la plateforme mobile (40) par rapport à un plan dans lequel la plateforme fixe (10) est située ;
dans laquelle lorsque la partie élastique (74) est à l'état étiré, après le déplacement de la position de centre de gravité de la plateforme mobile (40), la gravité de la plateforme mobile (40) est compensée sur la base d'une troisième distance, de la première distance, de la deuxième distance, de l'allongement de la partie élastique (74), de l'angle d'inclinaison de tangage, et de l'angle d'inclinaison de fil de traction ; et la troisième distance est une distance entre la position de centre de gravité de la plateforme mobile (40) après le déplacement et la position de centre de gravité de la plateforme mobile (40) après l'inclinaison.

12. Structure de taille (100) d'un robot (1000) selon la revendication 10, dans laquelle un espace de réception (48) et un trou de fil de traction (49) sont formés dans la plateforme mobile (40) ; le fil de traction (75) comprend une tête de fil de traction (751) ; la tête de fil de traction (751) est reçue dans l'espace de réception (48) ; et le fil de traction (75) sort par le trou de fil de traction (49).

13. Structure de taille (100) d'un robot (1000) selon la revendication 10, dans laquelle le suiveur (71) comprend :

une partie de suiveur (711) raccordée à la bague interne (21) du palier de support de charge (20) ;
une partie de fixation (712) prévue avec un trou de fixation (7121), la partie fixée (73) étant montée dans le trou de fixation (7121) ; et
une partie d'extension (713), l'ensemble de poulie (72) étant agencé au niveau de la partie d'extension (713).

14. Structure de taille (100) d'un robot (1000) selon la revendication 12, dans laquelle suiveur (71) comprend deux parties d'extension (713) espacées l'une de l'autre ; une fente de poulie (7131) est formée entre les deux parties d'extension (713) ; chaque partie d'extension (713) est prévue avec un trou de broche (7132) ; l'ensemble de poulie (72) comprend deux systèmes de poulie (721) ; les deux systèmes de poulie (721) sont agencés au niveau des parties d'extension (713) d'une manière espacée ; les systèmes de poulie (721) comprennent des poulies (7211), des dispositifs d'espacement et des broches (7212) ; les poulies (7211) sont agencées entre les deux parties d'extension (713) ; les broches (7212) pénètrent à travers les trous de broche (7132) et les poulies (7211) ; et les dispositifs d'espacement sont agencés entre les poulies (7211) et les parties d'extension (713).

15. Robot (1000) comprenant :

la structure de taille (100) selon l'une quelconque des revendications 1 à 14 ;
une structure de corps (300) raccordée à la plateforme mobile (40) de la structure de taille (100) ; et
une structure de membre inférieur (400) raccordée à la plateforme fixe (10) de la structure de taille (100).

FIG. 1

FIG. 2

FIG. 3

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104985585 A
- CN 103192377 B

- WO 2020245038 A1